# FASCICULE DE BREVET EUROPEEN

(11) **EP 1 358 413 B1**
(45) Date de publication et mention de la délivrance du brevet: **13.03.2019**
(21) Numéro de dépôt: 02701337.4
(22) Date de dépôt: 29.01.2002
(51) Int. Cl.: F16K 1/22, F16K 47/02

(54) **ROBINET AVEC ARMORTISSEUR**
VENTIL MIT DÄMPFER
ONE-QUARTER TURN VALVE WITH DAMPER

(30) Priorité: 30.01.2001 FR 0101213
(43) Date de publication de la demande: 05.11.2003
(73) Titulaire: KSB S.A.S, 92230 Gennevilliers (FR)
(72) Inventeur: WATTIGNIER, Claude, F-33400 Talence (FR); LARRIEU, Lucien, F-64220 St Jean Pied De Port (FR)
(74) Mandataire: Eidelsberg, Victor Albert
(86) Numéro de dépôt international: PCT/FR2002/000341
(87) Numéro de publication internationale: WO 2002/061310

(56) Documents cités:
- US-A- 3 098 502
- US-A- 4 556 192

## Description

La présente invention concerne les robinets quart de tour que ce soit des robinets à boule ou surtout des robinets à papillon.

Un robinet quart de tour comporte un corps, un obturateur monté dans le corps et des premiers moyens destinés à appliquer à l'obturateur un couple de rotation moteur dans un premier sens pour le faire passer de la position de fermeture à 0° dans laquelle du fluide ne peut pas passer dans le robinet à la position d'ouverture à 90°, dans lequel il peut passer dans le robinet le plus grand débit de fluide possible.

Dans les stations de pompage des centrales de production d'énergie électrique, l'eau est aspirée dans une rivière ou le cas échéant dans une mer par des pompes pour alimenter ensuite des circuits de refroidissement de la vapeur en fin de cycle par des batteries de condenseurs.

Ces pompes très souvent de type hélico-centrifuge ont des débits d'eau de plusieurs dizaines de milliers de m³/heure. Elles sont montées à axe vertical et ont une sortie en forme de coude. Immédiatement après ce coude, un robinet est monté sur la tuyauterie. Sa fonction (tout ou rien) est de pouvoir isoler la pompe, car il y a en fait tout un ensemble de pompes montées en parallèle et débitant dans un collecteur commun.

Il faut pouvoir intervenir séparément sur chaque pompe soit pour des raisons de maintenance, soit pour permettre le fonctionnement des pompes en les regroupant par sous-ensembles, pour des régimes de marche différents.

Comme ces stations de pompages nécessitent des travaux de génie civil importants, on monte les robinets, pour limiter les coûts de génie civil, immédiatement après le coude de sortie de pompe et non, comme préconisé, après une longueur de conduite droite de 6 à 8 fois le diamètre qui devrait être intercalée entre le coude et le robinet de façon à obtenir une bonne stabilisation de l'écoulement.

Dans la configuration adoptée (robinet monté très près du coude), l'obturateur, en position robinet ouvert, se trouve placé dans un écoulement très perturbé (par la pompe, par le coude et par la combinaison des deux), et il peut y avoir interaction fluide-structure, c'est-à-dire qu'il peut arriver que le fluide exerce des sollicitations (champs de pression, de vitesse) sur l'obturateur plein ouvert, ce qui a pour conséquence de créer sur lui une excitation mécanique vibratoire entretenue. Ces vibrations peuvent induire un battement hydrodynamique ou aérodynamique de l'obturateur dans l'écoulement.

Or, ces robinets sont de grand diamètre (> 1 mètre) et sont commandés par des actionneurs automatiques irréversibles dont beaucoup fonctionnent sur le principe vis-roue tangente. Compte tenu de la configuration des stations de pompage, il y a très souvent une liaison mécanique additionnelle de type rallonge entre le robinet et l'actionneur. Il y a donc toute une cascade de jeux en rotation possibles le long de la chaîne cinématique qui va de l'obturateur à la vis de l'actionneur :
- liaison obturateur - arbre
- liaison arbre - rallonge
- liaison rallonge - roue tangente (avec quelque fois un insert intermédiaire rapporté dans la roue)
- liaison roue - vis à l'intérieur de l'actionneur (jeu fonctionnel).

L'écoulement sollicite l'obturateur en rotation qui, bien que plein ouvert, se met à battre dans la limite fixée par les jeux. Ce battement à basse fréquence s'accompagne de chocs sur les butées qui limitent le déplacement de l'obturateur et l'élément le plus faible de la chaîne cinématique atteint rapidement la limite de rupture (fatigue + chocs).

L'invention vise un robinet dans lequel il ne se produit pas de rupture même s'il est en une position dans laquelle il se produirait normalement des battements. Un dispositif suivant le préambule de la revendication 1 est décrit au US-4556192.Selon l'invention, il est prévu des seconds moyens destinés à appliquer à l'obturateur, seulement lorsqu'il atteint, sous l'action des premiers moyens destinés à lui appliquer un couple moteur, une position angulaire de résistance d'au moins 80°, un couple résistant en sens inverse du premier sens, des troisièmes moyens étant destinés à modifier l'angle à partir duquel s'applique le couple résistant.

Grâce à ce couple résistant, on annule les jeux et on supprime ainsi les battements à la source des ruptures.

De préférence, le couple résistant ne représente pas plus de 90% du couple moteur de façon à ce que l'actionneur puisse continuer à ouvrir à 90° le robinet sans pour autant devoir être surdimensionné par rapport à ce qui est habituel. On sait en effet que le couple moteur nécessaire pour ouvrir à plein le robinet est bien moindre que celui qui est nécessaire dans certaines positions angulaires où le robinet est entrouvert.

Pour que les seconds moyens destinés à appliquer un couple résistant soient efficaces, il vaut mieux qu'ils représentent au moins 10% du couple moteur, et de préférence au moins 15% et mieux encore au moins 25% de ce couple.

Suivant un mode de réalisation, la position angulaire de résistance est d'au moins 85°. C'est tout particulièrement dans l'intervalle compris entre 85° et 90° que se produisent des battements.

Suivant un mode de réalisation particulièrement simple à réaliser, les moyens destinés à appliquer un couple résistant comportent un bras solidaire en rotation de l'obturateur et un ressort disposé de manière a n'être sollicité par le bras que lorsqu'est atteinte la position angulaire de résistance. Le ressort comprimé par le bras a alors tendance à le faire tourner en sens inverse et à appliquer ainsi le couple résistant souhaité.

De préférence, le bras est solidaire en rotation de l'axe qui est monté en regard de l'arbre d'entraînement de l'obturateur.

Au dessin annexé, donné uniquement à titre d'exemple :
la figure 1 est une vue en coupe d'un robinet à papillon suivant l'invention,

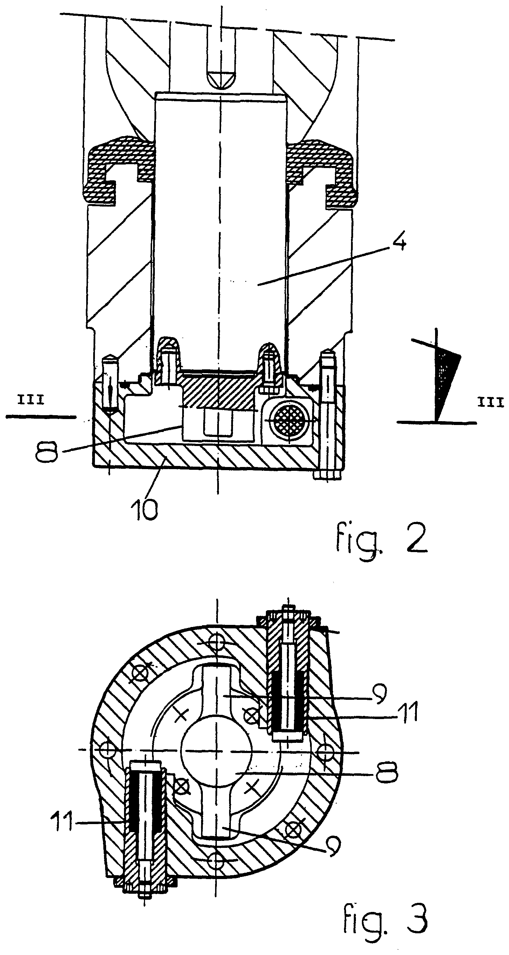

la figure 2 est une vue à plus grande échelle d'une partie de la figure 1, et
la figure 3 est une vue en coupe suivant la ligne III-III de la figure 2.

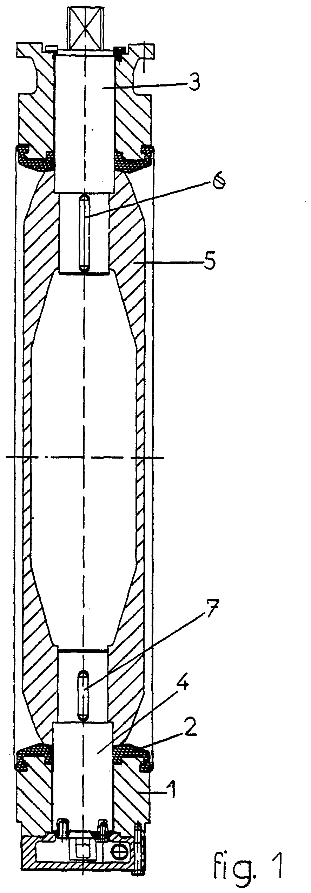

Le robinet quart de tour représenté à la figure 1 comprend un corps 1 de forme annulaire sur la face intérieure duquel est collée une manchette 2 en matière plastique qui a la forme d'une bague. Dans le corps 1 et dans la manchette 2 sont ménagées deux ouvertures diamétralement opposées. Dans l'ouverture supérieure passe un arbre 3 qui est relié à un actionneur non représenté, tandis que dans l'ouverture inférieure passe un axe 4. L'arbre 3 et l'axe 4 sont rendus solidaires en rotation d'un papillon 5 respectivement par une transmission 6 et 7.

A l'axe 4 est vissée une pièce 8 à deux bras 9 logée dans un carter 10. Dans ce carter sont montés fixe deux ressorts 11 de compression que les deux bras 9 sollicitent respectivement lorsqu'ils sont tournés de 85° par rapport à la position de fermeture du papillon. La pièce 8 d'appui tourne du même angle que le papillon dont elle est solidaire.

Lorsque le papillon atteint la position de 85°, les bras 9 sont repoussés par les ressorts 11 qui leur appliquent un couple résistant, lequel est transmis également au papillon. Ce couple résistant supprime les battements.

Chaque ressort 11 est monté dans une cartouche qui est elle-même vissée dans le carter 10 et bloquée en position par un écrou Selon que l'on visse plus ou moins la cartouche dans le carter 10, on modifie l'angle à partir duquel s'applique le couple résistant.

## Revendications

1. Robinet quart de tour comportant un corps (1), un obturateur (5) monté dans le corps (1) et des premiers moyens (3) destinés à appliquer à l'obturateur (5) un couple de rotation moteur dans un premier sens pour le faire passer de la position de fermeture à 0° à la position d'ouverture à 90°, et des deuxièmes moyens (8 à 11) destinés à appliquer à l'obturateur (5), seulement lorsqu'il a atteint, sous l'action des premiers moyens (3) destinés à lui appliquer le couple moteur, une position angulaire de résistance d'au moins 80°, un couple résistant en sens inverse du premier sens, **caractérisé par** des troisièmes moyens destinés à modifier l'angle à partir duquel s'applique le couple résistant.

2. Robinet suivant la revendication 1, **caractérisé en ce que** les troisièmes moyens destinés à modifier l'angle comprennent une cartouche (12), dans laquelle est monté un ressort (11) et qui est vissée dans le carter (10) et bloqué par un écrou.

3. Robinet suivant la revendication 1, **caractérisé en ce que** le couple résistant ne représente pas plus de 90% du couple moteur.

4. Robinet suivant la revendication 1 ou 3, **caractérisé en ce que** le couple résistant représente au moins 10% du couple moteur.

5. Robinet suivant la revendication 4, **caractérisé en ce que** le couple résistant représente au moins 15% du couple moteur.

6. Robinet suivant la revendication 5, **caractérisé en ce que** le couple résistant représente au moins 25% du couple moteur.

7. Robinet suivant l'une des revendications précédentes, **caractérisé en ce que** la position angulaire de résistance est d'au moins 85°.

8. Robinet suivant l'une des revendications précédentes, **caractérisé en ce que** les moyens destinés à appliquer un couple résistant comportent un bras (9) solidaire en rotation de l'obturateur (5) et un ressort (11) disposé de manière à n'être sollicité par le bras que lorsqu'est atteinte la position angulaire de résistance.

9. Robinet suivant la revendication 8, **caractérisé en ce que** le bras (9) fait partie d'une pièce (8) solidaire en rotation d'un axe (4) en regard de l'arbre (3) d'entraînement de l'obturateur (5).

10. Robinet suivant les revendications 8 et 9 prises ensemble, **caractérisé en ce que** les moyens destinés à modifier l'angle comprennent une cartouche dans laquelle est monté un ressort (11) et qui est vissée dans le carter (10) et bloquée par un écrou.

## Patentansprüche

1. Vierteldrehungsventil, umfassend einen Körper (1), einen Verschluss (5), der in dem Körper (1) angebracht ist, und erste Einrichtungen (3), die dazu bestimmt sind, auf den Verschluss (5) ein Motordrehmoment in der ersten Richtung aufzubringen, um ihn von der Schließposition bei 0° auf die Öffnungsposition bei 90° zu bewegen, und zweite Einrichtungen (8 bis 11), die dazu bestimmt sind, auf den Verschluss (5), erst wenn er unter der Einwirkung der ersten Einrichtungen (3), die dazu bestimmt sind, das Motordrehmoment auf ihn aufzubringen, eine Widerstands-Winkelposition von mindestens 80° erreicht hat, ein Gegendrehmoment entgegengesetzt zur ersten Richtung aufzubringen, **gekennzeichnet durch** dritte Einrichtungen, die dazu bestimmt sind, den Winkel zu verändern, ab dem das Gegendrehmoment aufgebracht wird.

2. Ventil nach Anspruch 1, **dadurch gekennzeichnet, dass** die dritten Einrichtungen, die dazu bestimmt sind, den Winkel zu verändern, einen Einsatz (12) umfassen, in dem eine Feder (11) befestigt ist, und der in das Gehäuse (10) geschraubt und durch eine Mutter arretiert ist.

3. Ventil nach Anspruch 1, **dadurch gekennzeichnet, dass** das Gegendrehmoment nicht mehr als 90 % des Motordrehmoments beträgt.

4. Ventil nach Anspruch 1 oder 3, **dadurch gekennzeichnet, dass** das Gegendrehmoment mindestens 10 % des Motordrehmoments beträgt.

5. Ventil nach Anspruch 4, **dadurch gekennzeichnet, dass** das Gegendrehmoment mindestens 15 % des Motordrehmoments beträgt.

6. Ventil nach Anspruch 5, **dadurch gekennzeichnet, dass** das Gegendrehmoment mindestens 25 % des Motordrehmoments beträgt.

7. Ventil nach einem der vorhergehenden Ansprüche, **dadurch gekennzeichnet, dass** die Widerstands-Winkelposition mindestens 85° beträgt.

8. Ventil nach einem der vorhergehenden Ansprüche, **dadurch gekennzeichnet, dass** die Einrichtungen, die dazu bestimmt sind, ein Gegendrehmoment aufzubringen, einen Arm (9) umfassen, der drehfest mit dem Verschluss (5) verbunden ist, und eine Feder (11), die derart angeordnet ist, dass sie nur dann von dem Arm vorgespannt wird, wenn die Widerstands-Winkelposition erreicht ist.

9. Ventil nach Anspruch 8, **dadurch gekennzeichnet, dass** der Arm (9) Teil eines Stücks (8) ist, das drehfest mit einer Achse (4) gegenüber der Antriebswelle (3) des Verschlusses (5) verbunden ist.

10. Ventil nach den Ansprüchen 8 und 9 gemeinsam, **dadurch gekennzeichnet, dass** die Einrichtungen, die dazu bestimmt sind, den Winkel zu verändern, einen Einsatz umfassen, in dem eine Feder (11) befestigt ist, und der in das Gehäuse (10) geschraubt und durch eine Mutter arretiert ist.

## Claims

1. A quarter-turn valve comprising a body (1), a shutter (5) mounted in the body (1) and a first means (3) for applying a motor-driven torque to the shutter (5) in a first direction to move it from the closed position at 0° to the open position at 90°, and two second means (8 to 11) for applying to the shutter (5), only when it has reached, under the action of the first means (3) for applying the motor torque, an angular resisting position of at least 80°, a resisting torque in a direction opposite to the first direction, **characterised by** a third means for changing the angle from which the resisting torque is applied.

2. A valve according to claim 1, **characterised in that** the third means for changing the angle comprises a cartridge (12), in which is mounted a spring (11) which is screwed into the housing (10) and locked by a nut.

3. A valve according to claim 1, **characterised in that** the resisting torque does not exceed 90% of the motor torque.

4. A valve according to claim 1 or 3, **characterised in that** the resisting torque is at least 10% of the motor torque.

5. A valve according to claim 4, **characterised in that** the resisting torque is at least 15% of the motor torque.

6. A valve according to claim 5, **characterised in that** the resisting torque is at least 25% of the motor torque.

7. A valve according to one of the preceding claims, **characterised in that** the angular position of resistance is at least 85°.

8. A valve according to one of the preceding claims, **characterised in that** the means for applying a resisting torque comprise an arm (9) that rotates together with the shutter (5) and a spring (11) arranged so that it is only loaded by the arm when it reaches the angular position of resistance.

9. A valve according to claim 8, **characterised in that** the arm (9) forms part of a component (8) that rotates together with a shaft (4) with respect to the drive shaft (3) of the shutter (5).

10. A valve according to claims 8 and 9 taken together, **characterised in that** the means for changing the angle comprises a cartridge in which a spring (11) is mounted which is screwed into the housing (10) and locked by a nut.
